# EUROPEAN PATENT APPLICATION

(11) **EP 1 816 471 A1**
(43) Date of publication of application: **08.08.2007**
(21) Application number: 06256503.1
(22) Date of filing: 21.12.2006
(51) Int. Cl.: G01N 27/447

(54) **Microfluidic device**

(30) Priority: 29.12.2005 US 321302
(71) Applicant: Agilent Technologies, Inc., Santa Clara, California 95051 (US)
(72) Inventor: Fazzio, Shane R., Loveland CO 80538 (US); Brennen, Reid, San Francisco CA 94110 (US); Killeen, Kevin, Palo Alto CA 94303 (US); Yin, Hongfeng, Cupertino CA 95014 (US); Goel, Atul, Fort Collins CO 80524 (US)
(74) Representative: Tollett, Ian

(57) **Abstract**

A fluidic device (10) is provided that includes a body (11) and a contiguous electrically conductive layer (100). The body (11) has interior and exterior surfaces. The interior surface defines at least a well (50) and a fluid-transporting feature (25), e.g., a microfeature in fluid-communication with the well (50). The well (50) has a sidewall (46S) and an exterior opening (46E) terminating at the exterior surface (44). The contiguous electrically conductive layer (100) is located on at least the sidewall (46S) of the well (50) and selected regions of the interior and exterior surfaces so as to form a contact pad region (102) on the exterior surface (44) in electrical communication with any fluid within the fluid-transporting feature (25). Also provided is a method for forming a fluidic device (10).

## Description

The invention relates generally to fluidic devices having a contiguous conductive region over interior and exterior surfaces thereof. In particular, the invention relates to such devices in which the conductive region is located at least in part on a sidewall of a well in fluid-communication with a fluid-transporting feature contained in the devices.

Parallel to trends in the electronics and computer industries toward miniaturization, there is also a trend toward miniaturization in the field of chemical and biochemical analysis and instrumentation. In particular, microfluidic technologies have been developed to carry out chemical and biochemical analyses. Microfluidic systems provide numerous advantages over traditional techniques. For example, microfluidic systems typically have significantly smaller reagent requirements, faster throughput, greater suitability for automation. In some instances, improved data quality may be provided.

Also like the microelectronic industry, there has been a continuing effort to develop and improve manufacturing techniques so as to produce microfluidic devices in increasing quantities at lower costs. As the cost per microfluidic device is lowered, it becomes economically feasible to use such devices as disposable items. Accordingly, there is a need to develop manufacturing processes for microfluidic technologies that correspond to "wafer level" semiconductor processing techniques. Such "wafer level" technologies would allow for simultaneous rather than sequential processing associated with the production of microfluidic devices and/or components thereof, thereby reducing their per unit cost.

Further parallel to the microelectronic industry in which chips are packaged with a carrier to facilitate handling, testing and other processes associated with the testing and use of the chips, a microfluidic device may be packaged with a caddy. When a microfluidic device is electrically connected to a caddy to form a package, the package formed as a result may be connected to additional equipment for a number of purposes. For example, the package may facilitate connection of the device to electrodes and a voltage source so that the device may carry out its intended function, e.g., chemical processing, separation, etc. Optionally, the caddy may be detachable from the microfluidic device.

For example, lab-on-a-chip bioanalysis may utilize a microfluidic device that includes a well in fluid communication with a gel-filled microchannel interposed between a cover plate and a substrate. The device may be packaged with a caddy. Once a sample is loaded into the well, an electrode connected to a voltage source may be interfaced with the package. As a result, an electric field may be applied to provide a motive force to direct sample movement through the gel. Because different constituents of the sample travel through the gel at different rates, the constituents are electrophoretically separated. When the sample constituents are separated, the electrode may be removed for reuse, e.g., interfaced to additional microfluidic devices to carry out electrophoretic analysis.

While the microfluidic devices may be considered disposable, analytical equipment or items interfacing therewith may not be. This raises a number of issues relating to the construction of the microfluidic devices. For example, in order to effect electrophoretic movement in a gel-filled microchannel downstream from a well of a microfluidic device, an electrode and/or an electrically conductive portion of a caddy may be placed in a direct contact with fluid in the well. This approach exhibits a number of drawbacks. To avoid contamination, the electrode and/or the caddy must be cleaned to remove any residual matter on the electrodes between each analytical run. In addition, certain emerging technologies such as those involving hydrodynamic injection may require equipment that may be interfaced with the same well. Arrangements that require electrode and/or caddy placement within a well of a microfluidic device tend to complicate design of apparatuses associated with such emerging technologies.

Accordingly, there is a need to provide on-device contacts and conductive traces on microfluidic devices to ensure that electric fields are applied in a controlled manner to effect fluid movement therein. A number of patents and publications describe microfluidic devices that employ on-device contacts and conductive traces. See, e.g., U.S. Patent No. 6,068,752 to Dubrow et al. As is the case with microchips, there are a number of ways to form on-device contacts and traces. Vapor deposition techniques are known in the field of microfluidics. For example, U.S. Patent No. 6,635,487 to Lee et al. describes a device for use in testing microfluidic fluorescence detection system that includes a metallized region that serves as an opaque material.

Nevertheless, there exist additional opportunities to provide improved technologies associated with conductive regions on surfaces of microfluidic devices. In particular, there exists opportunities to provide microfluidic devices with a construction that facilitates wafer level production techniques and that allows for their facile interfacing with analytical equipment, e.g., through the use of caddies.

The invention preferably provides a fluidic device that includes a body and a contiguous electrically conductive layer. The body has interior and exterior surfaces. The interior surface defines at least a well and a fluid-transporting feature in fluid-communication with the well. The well has a sidewall and an exterior opening terminating at the exterior surface. The contiguous electrically conductive layer is located on at least the sidewall of the well and selected regions of the interior and exterior surfaces so as to form a contact pad region on the exterior surface in electrical communication with any fluid within the fluid-transporting feature.

The invention is particularly suited for microfluidic applications. For example, the fluid-transporting feature may be a microfeature that contains separation media such as electrophoretic gel. In any case, the pad region may be positioned to allow for contact therewith by an electrode that does not contact any fluid within the well and/or the fluid-transporting feature.

Typically, the body includes a substrate and a cover plate immobilized such that their interior surfaces face each other. The fluid-transporting feature is defined at least in part by portions of the interior substrate and cover plate surfaces. The interior surface of the cover plate opposes the exterior surface. A through hole extends from the exterior opening to an interior opening on the interior cover plate surface, thereby defining at least a part of the well. The exterior opening is typically larger than the interior opening. Optionally, substantially no portion of the sidewall is line-of-sight inaccessible from the exterior opening.

Also typically, the conductive layer includes a metal. In addition or in the alternative, the conductive layer may include a plurality of compositionally different sublayers. Further, the conductive material may be formed as a result of ion implantation.

Optionally, the device may be packaged with a caddy to form a fluidic assembly. The device and the caddy may permanently or detachably interfaced with each other. In some instances, the caddy includes a through hole constructed to provide electrical access to the contact pad region by an electrode. The caddy itself may be electrically connected to the device at the contact pad region.

The invention also provides a method for forming a fluidic device. A body is preferably provided having exterior and interior surfaces. The interior surface defines at least a well having a sidewall and an exterior opening terminating at the exterior surface and a fluid-transporting feature in fluid-communication with the well. A contiguous electrically conductive layer is deposited on at least the sidewall of the well and a selected region of the exterior surfaces to form a contact pad region on the exterior surface in electrical communication with any fluid within the fluid-transporting feature.

Typically, the layer is deposited through a vapor deposition technique involving sputtering and/or evaporation. However, ion implantation technologies can be used as well. In addition, the layer may be simultaneously deposited on a plurality of attached bodies to produce a plurality of fluidic devices.
A number of preferred embodiments of the invention will now be described with reference to the drawings, in which:

FIGS. 1A-1C, collectively referred to as FIG. 1, depict an exemplary microfluidic device of the invention. FIG. 1-A shows the device in exploded view. FIG. 1B shows the device in cross-sectional view. FIG. 1C shows the device in top view.

FIGS. 2A and 2B, collectively referred to as FIG 2, depict an exemplary process of the invention that employs a shadow mask.

FIGS. 3A-3C, collectively referred to as FIG. 3, depict an exemplary process of the invention that employs a photomasking and etching technique.

FIGS. 4A and 4B, collectively referred to as FIG. 4, depict an exemplary process of the invention that employs a lift-off technique.

FIGS. 5A and 5B, collectively referred to as FIG.5, depict an exemplary process of the invention that employs an ion implantation technique.

FIGS. 6A and 6B, collectively referred to as FIG. 6, depict in top view an exemplary device having 16 wells before and after a conductive layer is deposited.

FIG. 7 shows in cross-sectional view a portion of the device of FIG. 1 packaged with a caddy that includes a through hole constructed to provide electrical access to a contact pad region of the device by an electrode.

FIG. 8 shows in cross-section view a portion of the device of FIG. 1 packaged with a caddy electrically connected to a contact pad thereof.

Before describing the present invention in detail, it is to be understood that the invention is not limited to specific microfluidic devices or types of analytical instrumentation, as such may vary. It is also to be understood that the terminology used herein is for the purpose of describing particular embodiments only, and is not intended to be limiting.

In addition, as used in this specification and the appended claims, the singular article forms "a," "an," and "the" include both singular and plural referents unless the context clearly dictates otherwise. Thus, for example, reference to "a conductive layer" includes a plurality of conductive layers as well as a single conductive layer, reference to "a substrate" includes a single substrate as well as a combination of substrates, and the like.

Furthermore, terminology indicative or suggestive of a particular spatial relationship between elements of the invention is to be construed in a relative sense rather an absolute sense unless the context of usage clearly dictates to the contrary. For example, the terms "over" and "on" as used to describe the spatial orientation of a conductive layer relative to a surface does not necessarily indicate that layer is located above the surface. Thus, in a device that includes a conductive layer on a surface, the conductive layer may be located above, at the same level as, or below the surface depending on the device's orientation. Similarly, an "upper" surface of a substrate may lie above, at the same level as, or below other portions of the substrate depending on the orientation of the substrate.

In this specification and in the claims that follow, reference will be made to a number of terms that shall be defined to have the following meanings, unless the context in which they are employed clearly indicates otherwise:

The term "caddy" as used herein refers to a carrier or other item that may be packaged with a fluidic device.

The term "flow path" as used herein refers to the route or course along which a fluid travels or moves. Flow paths may be formed from one or more fluid-transporting features of a microfluidic device.

The term "fluid-transporting feature" as herein refers to an arrangement of solid items or portions thereof that direct fluid flow. As used herein, the term includes, but is not limited to, capillaries, tubing, chambers, reservoirs, conduits and channels. The term "conduit" as used herein refers to a three-dimensional enclosure formed by one or more walls and having an inlet opening and an outlet opening through which fluid may be transported. The term "channel" is used herein to refer to an open groove or a trench in a surface. A channel in combination with a solid piece over the channel forms a conduit.

The term "fluid-tight" is used herein to describe the spatial relationship between two solid surfaces in physical contact such that fluid is prevented from flowing into the interface between the surfaces.

The term "line-of-sight" is used to describe a required unobstructed spatial relationship for certain material deposition techniques, e.g., vapor deposition techniques such as sputtering and evaporation, in which a material from a material source is deposited on a surface. For example, the term "line-of-sight inaccessible through the exterior opening" refers to a well having an opening and a geometry that does not lend itself to the formation of a contiguous layer on a sidewall and/or another desired surface in the well by such a deposition technique through the opening.

Accordingly, the term "substantially" as in "substantially no portion of the sidewall is line-of-sight inaccessible from the exterior opening" refers such a well geometry that may include portions which may not be helpful to the deposition technique but which do not interfere with the deposition technique to a sufficient degree so as to prevent the formation of a contiguous layer on the sidewall portion. The terms "substantial" and "substantially" are analogously used in other contexts as well.

The prefix "micro" refers to items having dimensions on the order of micrometers or having volumes on the order of microliters. Thus, for example, the term "microfluidic device" refers to a device having features of micron or submicron dimensions, and which can be used in any number of processes, chemical or otherwise, involving very small amounts of fluid. Such processes include, but are not limited to, electrophoresis (e.g., capillary electrophoresis or CE), chromatography (e.g., µLC), screening and diagnostics (using, e.g., hybridization or other binding means), and chemical and biochemical synthesis (e.g., DNA amplification as may be conducted using the polymerase chain reaction, or "PCR") and analysis (e.g., through peptidic digestion). The features of the microfluidic devices are adapted to their particular use. For example, microfluidic devices that are used in separation processes, e.g., CE, may contain microchannels (termed "microconduits" herein when enclosed, i.e., when the cover plate is in place on the microchannel-containing first substrate surface) on the order of 1µm to 200 µm in diameter, typically 10 µm to 75 µm in diameter, and approximately 0.1 to 50 cm in length. (As discussed below, the features of the inventive device may be of any convenient shape, so thee term "diameter" does not indicate that microchannels necessarily have circular cross-section.) Microfluidic devices that are used in chemical and biochemical synthesis, e.g., DNA amplification, will generally contain reaction zones (termed "reaction chambers" herein when enclosed, i.e., again, when the second substrate is in place on the microchannel-containing first substrate surface) having a volume of about 1 nl to about 100 µl, typically about 10 nl to 20 µl. Other terms containing the prefix "micro," e.g., "microfeature," are to be construed in a similar manner.

In general, the invention generally relates to fluidic devices having a body that contains a well and a fluid-transporting feature in fluid communication therewith. The body has an exterior surface and an interior surface that defines at least the well and the fluid-transporting feature. The well has a sidewall and an exterior opening terminating at the exterior surface. Located on selected regions of the interior and exterior surfaces, e.g., on at least the sidewall of the well, is a contiguous electrically conductive layer. The layer forms a contact pad region on the exterior surface and provides electrical communication with any fluid within the fluid-transporting feature.

While the body of the device may vary in construction, the body typically includes a substrate and a cover plate each having an interior surface that oppose the other and defining at least in part the fluid transporting feature. The cover plate also has an interior surface and a through hole that extends from the exterior opening to an interior opening on the interior cover plate surface. The well may be defined at least in part by the through hole.

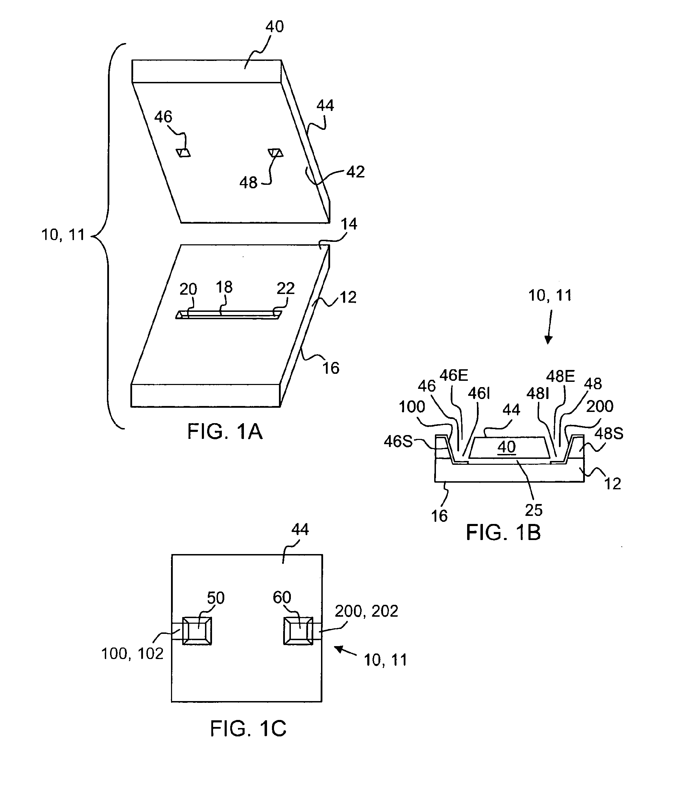

FIG. 1 shows an exemplary microfluidic device in simplified form. As with all figures referenced herein, in which like parts are referenced by like numerals, FIG. 1 is not necessarily to scale, and certain dimensions may be exaggerated for clarity of presentation. As illustrated in FIG. 1A, the device 10 includes a body 11 that is formed in part by substrate 12 comprising first and second substantially planar opposing surfaces indicated at 14 and 16, respectively, and is comprised of a material that is substantially inert with respect to fluids that will be transported through the device. The substrate 12 has a fluid-transporting feature in the form of a separation microchannel 18 in its upper surface 14. The separation microchannel 18 has an upstream terminus 20 at a first end and a downstream terminus 22 at the opposing end. While a single separation microchannel is shown, a device may also have a plurality of separation microchannels.

The separation microchannel, like other fluid-transporting features, may be formed through laser ablation or other techniques discussed below or known in the art. It will be readily appreciated that although the separation microchannel 18 has been represented in a generally extended form, separation microchannels for this and other embodiments can have a variety of configurations, such as a straight, serpentine, spiral, or any tortuous path. Further, as described above, the separation microchannel 18 can be formed in a wide variety of channel geometries, including semi-circular, rectangular, rhomboid, and the like, and the channels can be formed in a wide range of aspect ratios.

The body 11 also includes a cover plate 40. The cover plate 40 can be formed from any suitable material for joining with the substrate 12 and may be complementarily shaped with respect to the substrate 12. As shown in FIG. 1, the cover plate also has first and second substantially planar opposing surfaces indicated at 42 and 44, respectively. The contact surface 42 of the cover plate 40 is capable of interfacing closely with the contact surface 14 of the substrate 12 to achieve fluid-tight contact between the surfaces.

The cover plate 40 may include a variety of features. As shown, first and second through holes indicated at 46 and 48 respectively are provided extending through the cover plate. As shown, through hole 46 extends from opening 46E on surface 44 along sidewall 46S to opening 46I on surface 42 to provide communication between surfaces 42 and 44. Similarly, through hole 48 extends from opening 48E on surface 44 along sidewall 48S to opening 48I on surface 42 to provide communication between surfaces 42 and 44. As discussed below, when the device is assembled, these through holes will define wells.

In general, through holes 46 and 48 may be of varied geometries depending on the requirements of the invention with respect to the functionality of wells that they define. As shown in FIG. 1, though holes 46 and 48 may have a generally identical geometry and size. Each has a larger square opening 46E and 48E on surface 44 and a smaller square opening 46I and 48I. However, square shaped openings are not required. Exemplary alternative opening shapes include circles, triangles, pentagons, hexagons, ovals, etc. In any case, it is generally preferred but not required that the through holes are exhibit axial symmetry and substantial orthogonality relative to surface 42 and 44. As discussed below, the geometry of the through holes may be selected according to the technique employed for the formation of the conductive layer.

As shown in FIGS. 1B and 1C, the substrate 12 and cover plate 40 are substantially immobilized such that surface 14 is placed in fluid-tight facing relationship to surface 42. As a result, a separation conduit 25 is formed within device 10, defined by a portion of interior cover plate surface 42 and microchannel 18 in an interior surface of substrate 12. Through holes 46 and 48 are positioned over upstream and downstream termini 20 and 22, respectively, to communicate with separation conduit 25. As a result, each through hole defines at least in part wells 50 and 60. Wells 50 and 60 are located at termini 20 and 22, respectively, and fluidly communicates with separation conduit 25.

The cover plate 40 can be aligned over the surface 14 by any of a number of means known in the art. Pressure-sealing techniques may be employed, e.g., by using external means (such as clips, tension springs or an associated clamp), by using internal means (such as male and female couplings) or by using chemical means (e.g., adhesive or welding) to urge the pieces together. Other sealing techniques such as anodic bonding or fusion bonding may also be employed. However, as with all embodiments described herein the pressure sealing techniques may allow the contacts surfaces to remain in fluid-tight contact under an internal device fluid pressure of up to about 100 megapascals, typically about 0.5 to about 40 megapascals.

Also shown are contiguous electrically conductive layers 100 and 200.
Conductive layer 100 extends from contact pad regions 102 on surface 44 along sidewall 46S to upstream terminus 20 of microconduit 25. Similarly, conductive layer 200 extends from contact pad regions 202 on surface 44 along sidewall 48S to downstream terminus 22 of microconduit 25.

In operation, the separation conduit 25 may include or serve as a separation column adapted to separate fluid sample components according to molecular weight, polarity, hydrophobicity or other properties. Such a column may contain any of a number of known liquid separation media. For example, electrophoretic gels known in the art may be selected according to the sample to be separated. Such gels include agarose or polyacrylamide-based materials. In general, agarose gels are used much more commonly except for samples containing small fragments of nucleotidic materials. Polyacrylamide gels are also widely used for electrophoresis of peptidic samples.

Materials other than electrophoretic gels may be used as well. For example, chromatographic packing materials may be used that exhibit a surface area of about 100 m²/g to about 500 m²/g. In addition or in the alternative, the interior surface of the conduit may be chemically, mechanically or otherwise modified using techniques known in the art to carry out separation of the components of a fluid sample according to a selected property. For example, U.S. Patent No. 6,919,162 to Brennen et al., describes a laser ablated high surface area microchannel; U.S. Patent No. 5,770,029 to Nelson et al. describes an electrophoretic device that allows for integrated sample enrichment means using a high surface area structure; U.S. Patent No. 5,334,310 to Frechet et al. describes a microchannel having in-situ generated polymer therein. Thus, the interior surface of the conduit may exhibit surface characteristics such as adsorption properties and surface area similar to that associated with packing materials.

In any case, care is taken to ensure that any fluid contained in the separation conduit 25 and/or wells 50 and 60 contact only the portions of conductive layers 100 and 200 that are located within wells 50 and 60. That is, fluid within the device is physically isolated from the contact pad regions 102 and 104. A sample containing biomolecules such as nucleotidic and/or peptidic moieties may be loaded into upstream well 50. A potential is applied between conductive layers 100 and 200 at contact pad regions 102 and 202, respectively. As a result, an motive force is generated to effect electrophoretic movement in a flow path that extends from upstream well 50 through separation conduit 25 and to downstream well 60. As a result, the sample is separated into its constituents.

The materials used in conjunction with the invention are selected with regard to physical and chemical characteristics that are desirable for proper functioning of the invention. For example, the substrate of a microfluidic device may be fabricated from a material that enables formation of high definition (or high "resolution") features, i.e., microchannels, chambers and the like, that are of micron or submicron dimensions. That is, the material must be capable of microfabrication so as to have desired miniaturized surface features.

Preferably, the substrate is capable of being microfabricated in such a manner as to form features in, on and/or through the surface of the substrate. This may be done using materials removal techniques, e.g., dry etching, wet etching, laser etching, laser ablation or the like. However, any material removal technique should be employed with care so as to avoid uncontrolled materials removal. For example careful selection of etch compositions and/or parameters may be required to avoid uncontrolled undercutting, that may accompany etching processes.

Microstructures can also be formed on the surface of a substrate by other techniques. For example, features may be molded and/or embossed on the surface of a substrate. In addition, additive techniques may be used. For example, microstructures may be formed by adding material to a substrate, e.g., using photo-imageable polyimide to form polymer channels on the surface of a glass substrate. Also, all device materials used should be chemically inert and physically stable with respect to any substance with which they come into contact when used to introduce, transport, separate, process or analyze a fluid sample (e.g., with respect to pH, electric fields, etc.).

Suitable materials for forming the body of the present devices include, but are not limited to, polymeric materials, semiconductors, ceramics (including aluminium oxide and the like), glass, composites, and laminates thereof. In general, the terms "ceramic," "semiconductor" and "polymeric" are used herein in their ordinary sense. For example, the term "semiconductor" is used to indicate any of various solid crystalline substances having electrical conductivity greater than insulators but less than good conductors. Exemplary semiconductors include elemental solids such as Si and Ge and compound semiconductors such as GaAs. The term "ceramic" is used to indicate to a hard, brittle, heat-resistant and corrosion-resistant dielectric material made typically made by heating an inorganic compound, e.g., single or mixed metal oxides such as aluminum, zirconium or silicon oxides, nitrides, and carbides, at a high temperature. A ceramic material may be single crystalline, multicrystalline, or, as in the case of glass, amorphous.

Polymeric materials are particularly preferred herein, and will typically be organic polymers that are homopolymers or copolymers, naturally occurring or synthetic, crosslinked or uncrosslinked, linear or branched and/or cyclic. Exemplary polymers include, but are not limited to, polyimides, polycarbonates, polyesters, polyamides, polyethers, polyurethanes, polyfluorocarbons, polystyrenes, polysulfones, poly(acrylonitrile-butadiene-styrene)(ABS), acrylate and acrylic acid polymers such as polymethyl methacrylate, and other substituted and unsubstituted polyolefins, and copolymers thereof. In some instances, halogenated polymers may be used. Exemplary commercially available fluorinated and/or chlorinated polymers include polyvinylchloride, polyvinylfluoride, polyvinylidene fluoride, polyvinylidene chloride, polychorotrifluoroethylene, polytetrafluoroethylene, polyhexafluoropropylene, and copolymers thereof.

Generally, at least one of the cover plate and substrate is formed from a biofouling-resistant polymer when the microfluidic device is employed to transport biological fluids. Polyimide is of particular interest and has proven to be a highly desirable substrate material in a number of contexts. Polyimides are commercially available, e.g., under the tradename Kapton® (DuPont, Wilmington, Del.) and Upilex® (Ube Industries, Ltd., Japan). Polyetheretherketones (PEEK) also exhibit desirable biofouling resistant properties.

The devices of the invention may also be fabricated from a "composite," i.e., a composition comprised of unlike materials. The composite may be a block composite, e.g., an A-B-A block composite, an A-B-C block composite, or the like. Alternatively, the composite may be a heterogeneous combination of materials, i.e., in which the materials are distinct from separate phases, or a homogeneous combination of unlike materials. As used herein, the term "composite" is used to include a "laminate" composite. A "laminate" refers to a composite material formed from several different bonded layers of identical or different materials. Other preferred composite substrates include polymer laminates, polymer-metal laminates, e.g., polymer coated with copper, a ceramic-in-metal or a polymer-in-metal composite. One preferred composite material is a polyimide laminate formed from a first layer of polyimide such as Kapton®., that has been co-extruded with a second, thin layer of a thermal adhesive form of polyimide known as KJ®, also available from DuPont (Wilmington, Delaware).

The embodiments of the invention in the form of microfluidic devices can be fabricated using any convenient method, including, but not limited to, micromolding and casting techniques, embossing methods, surface micro-machining and bulk-micromachining. The latter technique involves formation of microstructures by etching directly into a bulk material, typically using wet chemical etching or reactive ion etching ("RIE"). Surface micromachining involves fabrication from films deposited on the surface of a substrate.

A preferred technique for preparing the present microfluidic devices is laser ablation. In laser ablation, short pulses of intense ultraviolet light are absorbed in a thin surface layer of material. When laser ablation technique is used, the laser must be selected according to the material to be removed. For example, the energy required to vaporize glass is typically five to ten times higher than that required for organic materials. Laser ablation will typically involve use of a high-energy photon laser such as an excimer laser of the F₂, ArF, KrCl, KrF, or XeCl type or of solid Nd-YAG or Ti:sapphire types. However, other ultraviolet light sources with substantially the same optical wavelengths and energy densities may be used as well. Laser ablation techniques are described, for example, by Znotins et al. (1987) Laser Focus Electro Optics, at pp. 54-70, and in U.S. Pat. Nos. 5,291,226 and 5,305,015 to Schantz et al. Preferred pulse energies for certain materials are greater than about 100 millijoules per square centimeter and pulse durations are shorter than about 1 microsecond. Under these conditions, the intense ultraviolet light photo-dissociates the chemical bonds in the substrate surface. The absorbed ultraviolet energy is concentrated in such a small volume of material that it rapidly heats the dissociated fragments and ejects them away from the substrate surface. Because these processes occur so quickly, there is no time for heat to propagate to the surrounding material. As a result, the surrounding region is not melted or otherwise damaged.

The fabrication technique that is used must provide for features of sufficiently high definition, i.e., microscale components, channels, chambers, etc., such that precise alignment "microalignment" of these features is possible, i.e., the laser-ablated features are precisely and accurately aligned, including, e.g., the alignment of complementary microchannels with each other, projections and mating depressions, grooves and mating ridges, and the like.

To immobilize the substrates of the inventive device relative to each other, fluid-tight pressure sealing techniques may be employed. In some instances, external means may be used to urge the pieces together (such as clips, tension springs or associated clamping apparatus). Internal means such as male and female couplings or chemical means such as welds may be advantageously used as well. Similarly, a seal may be provided between substrates. Any of a number of materials may be used to form the seal. Adhesives such as those in the form of a curable mass, e.g., as a liquid or a gel, may be placed between the substrates and subjected to curing conditions to form an adhesive polymer layer therebetween. Additional adhesives, e.g., pressure-sensitive adhesives or solvent-containing adhesive solutions may be used as well. Other means such as anodic or fusion bonding may also be used to form a seal between substrates.

In general, any of a number of materials may be used to from the conductive layer. Typically, the conductive layer includes one or more metals. The term "metal" generally describes any of a category of elements that usually have a shiny surface, are generally good conductors of heat and electricity, and can be formed into thin sheets or wires. For example, a conductive layer may be comprised of solid copper or a composite composition containing copper particles.

Additional metals suitable for use in the invention include, for example, gold, silver, nickel, tin, chromium, tungsten, molybdenum, iron, aluminum, zinc, titanium, platinum, combinations thereof, and alloys of any of the foregoing such as brass, bronze, and steel. Typically, small-grained metals are preferred for greater feature resolution.

In addition or in the alternative, a nonmetallic conductive material may be used to form the conductive layer. Exemplary nonmetallic conductive materials include carbon, e.g., graphite or acetylene black, conductive ceramics such as indium tin oxide and titanium nitride, and conductive polymers such as polypyrrole and polyaniline. Further, the conductive material may be formed as a result of ion implantation. For example, the conductive material may include polysilicon or doped silicon.

In some instances, the conductive layer may have a surface layer of a composition different from its bulk. For example, the conductive layer may include a plurality of compositionally different sublayers. In some instances, the surface layer may be comprised of a highly conductive coating such as gold, gold/nickel, gold/osmium or gold/palladium, or plated with a wear resistant, coating such as osmium, chromium or titanium nitride. In any case, the conductive layers of the inventive substrate may be comprised of the same material or different materials.

The invention also provides methods for forming fluidic devices as described herein. Typically, a body as described above is provided. A contiguous electrically conductive layer may be deposited on at least the sidewall of the well and a selected region of the exterior surfaces to form a contact pad region on the exterior surface in electrical communication with any fluid within the fluid-transporting feature.

Processes suitable for use with the invention may be adapted in wafer-level applications to form a plurality of devices in parallel. In an exemplary wafer-level process, a unitary substrate wafer may be provided that, when sectionalized, represents substrates for a plurality of devices. Accordingly, a plurality of fluid-transporting features may be arranged in an array and have coplanar front surfaces. A unitary cover may be placed over the unitary wafer to form an assembly of attached bodies. Once completed, the conductive layer may be formed on the appropriate surfaces. The assembly may then be cut to form individual fluidic devices.

The conductive layer may be formed after the body is assembled. However, the conductive layer may be formed at least in part on components of the body before their assembly. In addition, conductive layers may be formed in series or in parallel.

Any of a number of techniques may be used to form the conductive layer inventive device. In general, metallization can be achieved by any of a number of techniques including, for example, a vapor-phase deposition process such as sputtering or evaporation, or a liquid-phase depositing process such as electroplating. Tie coats and/or seed coats are sometimes used in such metallization techniques. Non-metallic conductive layers may be formed from any of a number of techniques known in the art. In some instances, ion implantation technologies can be advantageously used.

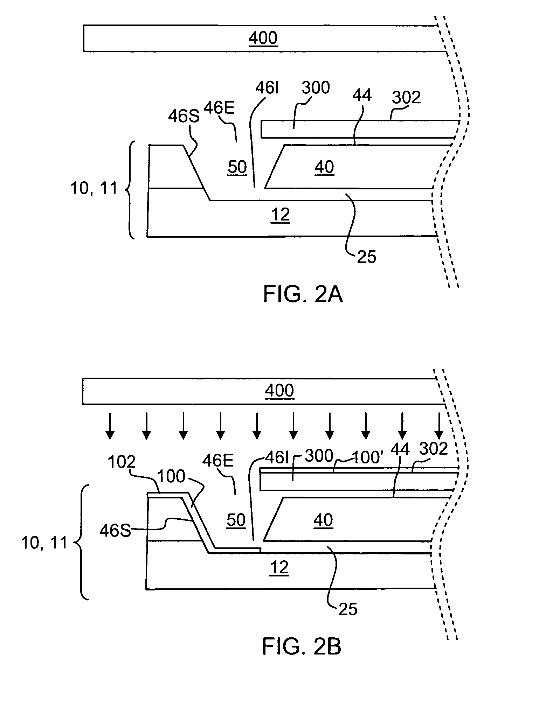

As discussed above, the invention may involve a contiguous electrically conductive layer 100 on at least a sidewall of a well and on an exterior surface to provide a contact pad region 102 on the exterior surface. FIG. 2 depicts an exemplary process of the invention that uses a shadow mask 300. In FIG. 2A, a portion of a device 10 is shown in cross-sectional view. The device 10 includes a body 11 that is formed from a cover plate 40 immobilized in fluid-tight relationship over a substrate 12. A well 50 extends from opening 46E along sidewall 46S to opening 46I and communicates with microconduit 25. A shadow mask 300 is placed over exterior surface 44.

FIG. 2B shows a sputtering deposition process in which a target 400 is used as a source of metal to form the conductive layer 100. As shown, the mask 300 is interposed between the body 11 and the target. Metal sputtered from target 400 is deposited on surface 302 of mask 300 as well as exposed portions of surface 44, sidewall 46S, and microconduit 25. As a result, contiguous layer 100 is formed that provides electrical communication between contact pad region 102 and the interior of well 50.

The geometry of the well may represent an important factor associated with the formation of such a layer, particularly when a vapor deposition technique or other line-of-sight process is used to deposit the layer. As shown in FIG. 2, opening 46E has a larger cross-sectional area than opening 46I. Thus, the sidewalls 46S of the through hole 46 exhibit a taper angle less than 90°. As taper angle approaches 90°, it becomes increasingly difficult to deposit a substantially contiguous layer that extends over surface 44 and sidewall 46S, and into microconduit 25. With a taper angle of 90° or greater, it may not be possible to form a contiguous layer using a line-of-sight deposition process.

Thus, taper angles may be selected according to the requirements of the contiguous layer. A shallow angle tends to allow the thickness of conductive layer on the side wall to increase at nearly the same rate as the thickness of the conductive layer on the exterior surface. However, a shallow angle may be problematic from a space constraint perspective. Thus, one of ordinary skill in the art will recognize that certain taper angle ranges are preferred. For example, in some instances, taper angles of about 5° to about 60° may be used with the invention. In some instances, taper angles of about 20° to about 60° may be employed. A taper angle of 45° may be optimal for many applications.

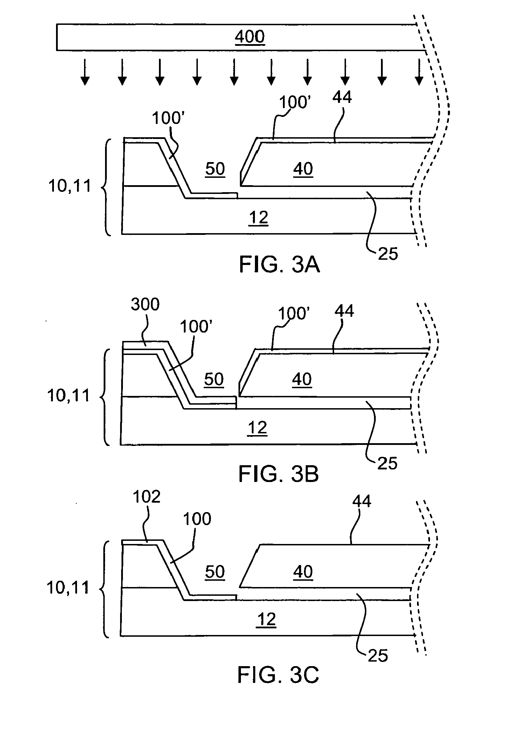

FIG. 3 depicts an exemplary process of the invention that employs photomasking and etching to form a contiguous layer 100 that includes a contact pad region 102 on exterior surface 44. As shown in FIG. 3A, a body 11 similar to that shown in FIG. 2 may be employed without any masking. As a result, a preliminary conductive layer 100' may be formed on all exposed surfaces. Such a layer may include tie coats and/or seed coats. Then, selective portions of the preliminary conductive layer 100' may be selectively removed through etching in a desired pattern. As shown in FIG. 3B, this may be done by protecting the not-to-be-removed portions of the layer 100' with a photomask 300. Photomasking technologies are well known in the art and may involve, for example, photoresists, laminate photoresists, and/or photoimageable polymers. Hardmasks may be used as well. As shown in FIG. 3B, once appropriate portions of the conductive layer 100' are removed, layer 100 remains under photomask 300. The photomask 300 may be removed by a solvent, e.g., acetone or n-methyl pyrrolidone, dry strip, e.g., ash, or some other cleaner. FIG. 3C shows the resulting patterned conductive layer 100.

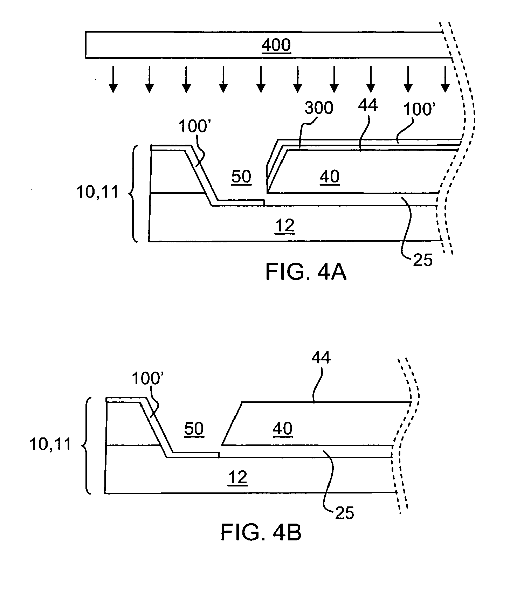

FIG. 4 illustrates an exemplary process of the invention that employs a lift-off technique to form a contiguous layer 100 that includes a contact pad region 102 on exterior surface 44. As shown in FIG. 4A, a body 11 similar to that shown in FIG. 3A may be employed but with masking. Any of the masking technologies discussed in conjunction with FIG. 3 may be used to pattern exposed surfaces. Once mask 300 is in placed, metallization may take place to form preliminary conductive layer 100'. Then, as shown in FIG. 4B, the photomask 300 as well as portions of the preliminary layer 100' thereon may be removed, resulting in a contiguous layer 100.

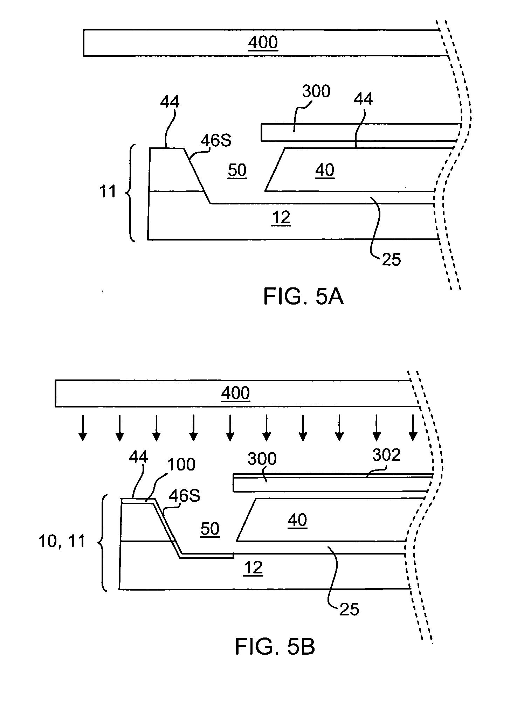

FIG. 5 shows a depiction of an exemplary process of the invention that employs an ion implantation technique to form the contiguous layer 100. As shown in FIG. 5A, this process begins in the same way as that shown in FIG. 2 except that an implant mask 300 is used in place of a shadow mask. As shown in FIG. 5B ions are implanted to convert exposed portions of surface 44, sidewall 46S, and microconduit 25 into the contiguous layer 100.

Thus, it should be apparent that other techniques known in the semiconductor manufacturing and packaging arts may be used to form the contiguous conductive layer. For example, screen printing technologies may be used with reflowed solder materials that wet appropriate surfaces to form the conducive layer. In addition, it is possible to sandwich the conduction layer between dielectric layers, to bury the conduction layer or to use multiple conduction layers. In such instances, wafer bonding, glass frits, dielectric deposition, or other processes may be employed. Starting with a conductive layer prepared in a manner described above, a dielectric layer may be deposited and subsequent conductive layers may be then formed on the dielectric layer.

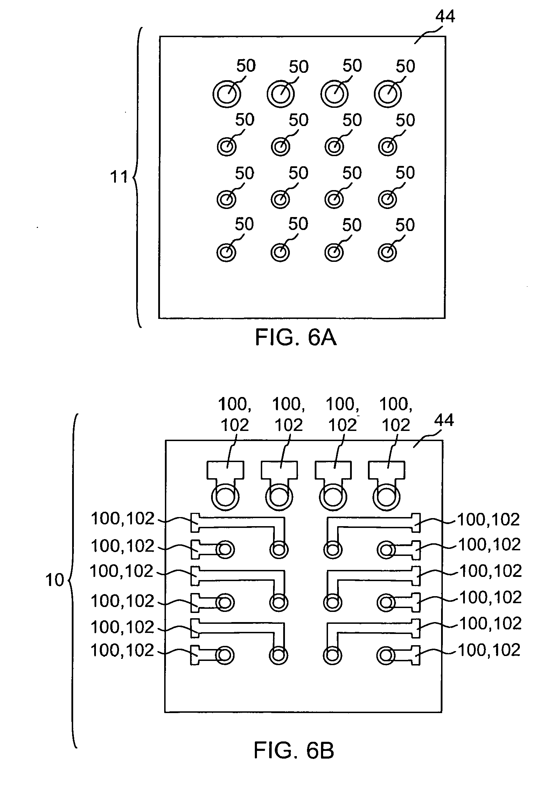

It should also be apparent that the invention represents an improvement over fluid devices known in the art in that the conductive layer serves to provide contact pad regions that are physically isolated from fluid samples therein. Each trace connects the well region to an isolated pad region located on the chip away from the well area. Location of the pads may be anywhere on the device surface. FIG. 6 shows in top view an exemplary device having 16 wells 50 before (FIG. 6A) and after (FIG. 6B) a conductive layer 100 is deposited to form contact pad regions 102 on exterior surface 44.

Typically, the contact pad regions on the exterior surface of the inventive devices are arranged in an ordered arrangement, i.e., an array such as rectilinear grids, parallel stripes, spirals, and the like. For example, devices may have a square front surface and/or a linear array of contact pad regions, i.e., a plurality of colinear contacts having equidistant neighboring contacts. As another example, a device may have a rectangular front surface and a rectilinear array of contact pad regions. In the case of FIG. 6, the contact pad regions 102 form three rectilinear arrays, two of which are oriented perpendicularly to one.

As discussed above, caddies may be advantageously used with the inventive devices. In some instances, the caddy may be constructed to provide an electrode electrical access to the contact pad region. In addition or in the alternative, the caddy may be electrically connected to the device. Such caddies may be detachable from or permanently affixed to the inventive devices. Caddies permanently affixed to disposable devices may themselves be disposable.

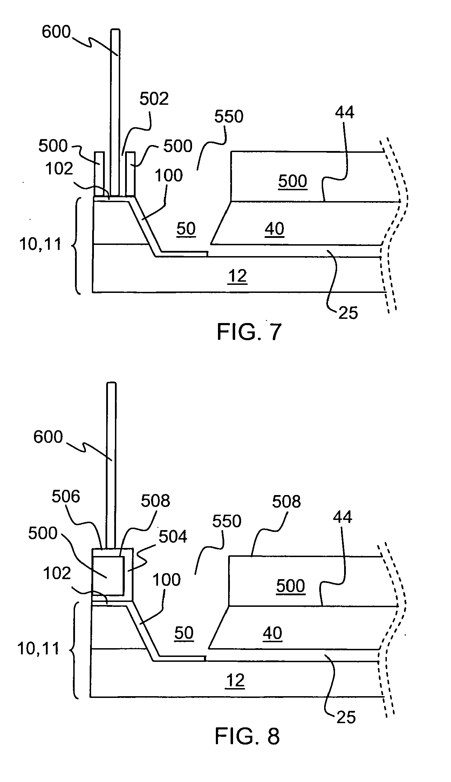

FIG. 7 shows in cross-sectional view a portion of the device of FIG. 1 packaged with a caddy 500. As shown, the caddy 500 interfaces with surface 44 of the device 10 and includes a plurality of through holes indicated at 502 and 550. Contact through hole 502 is aligned with contact pad region 102 and serves to provide electrode 600 with access to the contact pad region. Well through hole 550 is aligned with well 50 to avoid obstructing access thereto. In general, these through holes may be formed using any techniques known in the art such as drilling, laser drilling, etching, injection molding, etc.

FIG. 8 also shows in cross-section view a portion of the device of FIG. 1 packaged with a caddy 500 electrically connected to a contact pad 102 thereof. In general, the caddy 500 of FIG. 8 is similar to that shown in FIG. 7 in that they both interface with surface 44 of the device 10. However the caddy 500 of FIG. 8 does not include a contact through hole. Instead, a conductive path 504 provides electrical routing effective to provide contact pad region 102 electrical communication with caddy terminal 506 on an exterior surface 508 of the caddy. Such electrical routing may be buried within the caddy, e.g., provided in the form of a view, extended over a sidewall 100 of through hole 550, or both. Since caddy terminal 506 is exposed, electrode 600 is provided facile interface therewith.

Electrical routing considerations for the caddy are generally similar to such considerations for the device. For example, electrical routing on the caddy may serve to provide contact pad regions that are physically isolated from but electrically communicating with fluid samples in wells. In addition, any of the techniques described for forming a conductive layer on the device may be used to from a conductive layer on the caddy. For example, the caddy and the device may be simultaneously metallized in a wafer-level process. However, the electrical routing of the device and the caddy may involve different techniques as well. For example, metallic or conductive tape may be placed on the caddy to connect the caddy electrically with the device.

Variations of the present invention will be apparent to those of ordinary skill in the art in view of the disclosure contained herein. For example, the inventive device may be constructed to contain or exclude specific features according to the intended use of the device. When the device is not intended for biofluidic applications, the device may not require a biofouling resistant material. In addition, the invention is scale invariant and may be incorporated for devices of almost any size, microfluidic or otherwise. Furthermore, while the fluid transporting microfeatures of FIG. 1 have generally been depicted as having rectangular cross-sectional areas, the features are not limited to any particular shape or geometry. In any case, the invention is not limited to microfluidic applications involving microchannels on a substrate. For example, capillaries, tubing, and other fluid-transporting technologies may be used. Additional variations of the invention may be discovered upon routine experimentation without departing from the spirit of the present invention.

It is to be understood that, while the invention has been described in conjunction with the preferred specific embodiments thereof, the foregoing description merely illustrates and does not limit the scope of the invention. Numerous alternatives and equivalents exist which do not depart from the invention set forth above. For example, any particular embodiment of the invention, e.g., those depicted in any drawing herein, may be modified to include or exclude features of other embodiments. Other aspects, advantages, and modifications within the scope of the invention will be apparent to those skilled in the art to which the invention pertains.

All patents and patent applications mentioned herein are hereby incorporated by reference in their entireties.

## Claims

1. A fluidic device (10), comprising:
a body (11) having
an exterior surface (44), and
an interior surface defining at least
a well (50) having a sidewall (46S) and an exterior opening (46E) terminating at the exterior surface (44) and
a fluid-transporting feature (25) in fluid-communication with the well (50); and
a contiguous electrically conductive layer (100) located on at least the sidewall (46S) of the well (50) and a selected region of the exterior surface (44) so as to form a contact pad region (102) on the exterior surface (44) in electrical communication with any fluid within the fluid-transporting feature (25).

2. The device (10) of claim 1, wherein the body (11) comprises
a substrate (12) having an interior surface (14), and
a cover plate (40) having an interior surface (42) that opposes the exterior surface (44), and a through hole (46) that extends from the exterior opening (46E) to an interior opening (46I) on the interior cover plate surface (42), and
further wherein the interior cover plate and substrate surfaces (42, 14) are immobilized in facing relationship to each other, the fluid-transporting feature (25) is defined at least in part by portions of the interior substrate and cover plate surfaces (14, 42), and the well (50) is defined at least in part by the through hole (46) (46).

3. The device (10) of claim 1 or 2, wherein the fluid-transporting feature (25) is a microfeature.

4. The device (10) of claim 3, wherein the microfeature contains separation media.

5. The device (10) of claim 4, wherein the separation media comprises electrophoretic gel.

6. The device (10) of claim 2, wherein at least one of the substrate (12) and cover plate (40) comprise a polymer.

7. The device (10) of any preceding claim, wherein the conductive layer (100) comprises metal.

8. The device (10) of any preceding claim, wherein the conductive layer (100) comprises a plurality of sublayers of different compositions.

9. The device (10) of any preceding claim, wherein the conductive material is formed from ion implantation.

10. The device (10) of claim 2, wherein the exterior opening (46E) of the through hole (46) (46) is larger than the interior opening (46I).

11. The device (10) of claim 10, wherein substantially no portion of the sidewall (46S) is line-of-sight inaccessible through the exterior opening (46E).

12. A fluidic assembly comprising a caddy (500) packaged with the device (10) of claim 1.

13. The assembly of claim 12, wherein the caddy (500) includes a through hole (502) constructed to provide electrical access to the contact pad region (102) by an electrode (600).

14. The assembly of claim 12, wherein the caddy (500) is electrically connected to the device (10) at the contact pad region (102).

15. The assembly of any of claims 12 to 14, where in the caddy (500) is detachable from the device (10) of claim 1.

16. A fluidic apparatus, comprising,
a body (11) having
an exterior surface (44), and
an interior surface defining at least
a well (50) having a sidewall (46S) and an exterior opening (46E) terminating at the exterior surface (44) and
a fluid-transporting feature (25) in fluid-communication with the well (50);
a contiguous electrically conductive layer (100) located on at least a selected region of the exterior and interior surfaces so as to form a contact pad region (102) on the exterior surface (44) in electrical communication with any fluid within the fluid-transporting feature (25); and
an electrode (600) in electrical communication with a voltage source and contacting the contact pad region (102) without contacting any fluid within the well (50) and/or the fluid-transporting feature (25).

17. A method for forming a fluidic device (10), comprising:
(a) providing a body (11) having
an exterior surface (44), and
an interior surface defining at least
a well (50) having a sidewall (46S) and an exterior opening (46E) terminating at the exterior surface (44) and
a fluid-transporting feature (25) in fluid-communication with the well (50); and
(b) forming a contiguous electrically conductive layer (100) on at least the sidewall (46S) of the well (50) and a selected region of the exterior surface (44) to form a contact pad region (102) on the exterior surface (44) in electrical communication with any fluid within the fluid-transporting feature (25).

18. The method of claim 17, wherein step (b) is carried out through a vapor deposition technique or an ion implantation technique.

19. The method of claim 18, wherein the vapor deposition technique involves sputtering and/or evaporation.

20. The method of claim 17, wherein a plurality of attached bodies (11) is provided in step (a) and step (b) is carried out simultaneously for all attached bodies.
